(19) Europäisches Patentamt
European Patent Office
Office européen des brevets

(11) **EP 1 401 164 A1**

(12) **EUROPEAN PATENT APPLICATION**

(43) Date of publication:
**24.03.2004 Bulletin 2004/13**

(51) Int Cl.[7]: **H04L 25/02**

(21) Application number: **02292303.1**

(22) Date of filing: **19.09.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **TELEFONAKTIEBOLAGET LM ERICSSON**
**126 25 Stockholm (SE)**

(72) Inventors:
- **Mueller-Weinfurtner, Stefan**
  **NJ 07747 Aberdeen (US)**
- **Schramm, Peter**
  **91058 Erlangen (DE)**
- **Wachsmann, Udo**
  **91126 Schwabach (DE)**

(74) Representative: **Santarelli**
**14, avenue de la Grande Armée,**
**B.P. 237**
**75822 Paris Cedex 17 (FR)**

(54) **Bandwith estimation and adaptive filtering**

(57) The present invention concerns a method for bandwidth estimation and a method for adaptive filtering in a data receiver, wherein said data receiver has been provided with a set of filters each having a known bandwidth and capable of removing noise from a quantity $z_r$ derived from a received signal, either method comprising, for each one of these filters: a) the application of the filter to $z_r$, thus yielding a quantity $z_F$, and b) the calculation of the power $\Delta$ of the difference between $z_r$ and $z_F$. For bandwidth estimation, one determines for each filter whether it has truncated the noiseless component of $z_r$, on the basis of a criterion involving $\Delta$ and $\hat{\sigma}^2_n$, where $\hat{\sigma}^2_n$ is an estimate of the power of the noise component of $z_r$. For adaptive filtering, one selects one filter out of the set on the basis of the same criterion, in such a way that the largest possible amount of noise is removed from $z_r$ without truncating its noiseless component.

Fig.2

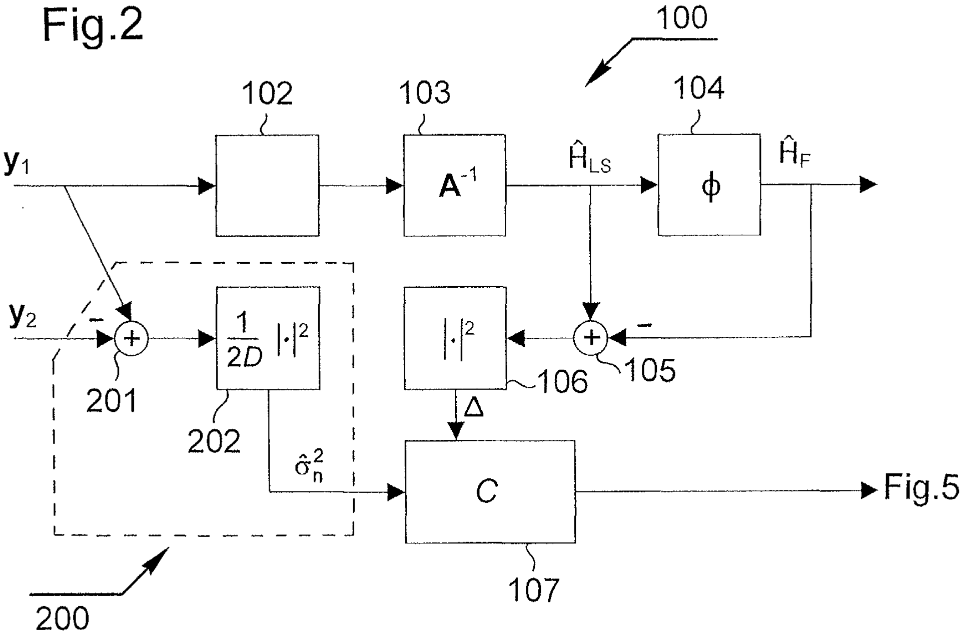


EP 1 401 164 A1

## Description

The present invention concerns the presence of additive noise in received signals. More specifically, it concerns the estimation of the bandwidth of the noiseless component of any chosen quantity derived from a received signal (possibly this received signal itself). It also concerns the adaptive suppression of the noise component of such a chosen quantity.

The invention is particularly useful in the field of wireless digital communications systems. In these systems, one usually deals with multipath channels: due to reflections on obstacles, the transmitted signal reaches the receiver after having followed a plurality of paths. Hence the received signal results from the superposition of a plurality of replica of the transmitted signal, each one associated (in the equivalent complex baseband representation) with a specific delay and attenuation. This received signal is therefore equal to the convolution of the transmitted signal with a so-called Channel Impulse Response (CIR) $h(t)$ (where $t$ denotes time). Equivalently, implementing a Fourier transform, this time-dispersive characteristic of a channel may be represented in the "frequency domain" by means of a "channel transfer function" $H(f)$; at any given frequency, the value of this function is called the "Channel Transfer Factor" (CTF). The CIR is non-zero only in an interval $0 < t < \tau$, where $\tau$ is the so-called excess delay of the channel, viz., the maximum possible delay between the various paths.

The data symbols to be transmitted are modulated, and the receiver demodulates the corresponding received signal in order to recover those symbols. Clearly, knowledge of the CIR allows one to conduct this demodulation more accurately.

Furthermore, in many modern digital communications systems, for example telephone systems or mobile radio systems, the demodulation process is "coherent". This requires that the system provides a means for "channel estimation", viz., for computing an estimate of some channel characteristics of interest (such as the channel impulse response) using a reference portion of the received signal. For example, in so-called pilot-assisted channel estimation, one transmits a "pilot signal" based on symbols which are a priori known by the receiver. As another example, in so-called decision-directed channel estimation, the receiver uses as a reference some received symbols whose value has been determined by means of a tentative decision process.

But a realistic channel always suffers from random noise, which adds up to the ideally-noiseless received signal. Therefore, if channel estimation is purely based on reference symbols, one only obtains a coarse channel estimate, so that the coherent demodulation process based on this estimate will offer sub-optimal performance. In order to improve over such coarse estimates, it is often necessary to take into account known statistical properties of the channel and/or the noise process. For example, channel variations over time or over frequency have typically a smaller bandwidth than the noise process, so that the amount of noise afflicting the estimates can be reduced by using a filter.

A filter is a device for signal processing whose output, in the frequency domain, is equal to the product of its input and of a complex frequency-dependent gain factor; the effect of a filter can therefore be represented by an impulse response, which is the Fourier-transform of this gain factor, and will be denoted $\phi(t)$ in the following. A filter used for the purpose of channel estimation is called a "Channel Estimation Filter" (CEF). The ability of a CEF to suppress noise has of course a direct effect on the performance of a coherent receiver.

Among the parameters characterising a CEF, an important one is its bandwidth. Let us assume for the sake of the discussion that we have a "perfect" filter in the sense that its operation causes negligible distortion of the noiseless received signal. Clearly, this bandwidth should be large enough to avoid cutting a piece out of the signal waveform. On the other hand, if this bandwidth is too large, the filter will not eliminate as much noise as it should.

A CEF ideally adapted to the statistics of a time-dispersive channel should be based on the so-called power delay spectrum of the CIR, which describes the expected channel output power for given delays. The major parameter of the power delay spectrum regarding the CEF is the above-mentioned excess delay of the channel, which represents the effective CIR length; namely, the expected power for delays greater than the excess delay is negligibly small. The problem is that this excess delay is unknown a priori to the receiver, and hence cannot be used in a straightforward manner to adapt the CEF bandwidth. Without adapting the filter, the CEF bandwidth has to be pre-set to a conservative value, according to the maximum expected delay in the planned applications of a communications system. This leads obviously to sub-optimal solutions, thus wasting some noise-suppression potential.

Therefore, when the channel varies due to varying physical conditions, it is desirable to implement in the receiver a filter with adjustable filter parameters. Alternatively, if several filters for channel estimation are implemented in the receiver, and each is optimum for a different range of physical conditions, then a decision criterion is needed in order to select the one among these filters which will achieve the most efficient "de-noising" of the channel estimate.

This problem arises, for example, in communications systems using Orthogonal Frequency-Division Multiplexing (OFDM).

OFDM is a multiple-channel modulation scheme. It is especially appropriate for highly frequency-selective channels such as typical channels for mobile communications, or for high-rate wireline transmission over copper lines.

Such channels are characterised by impulse responses which are substantially longer than one sample interval. This means that, even in the noiseless case, each received sample in the digital baseband domain is a superposition of multiple transmitted samples weighted by the appropriate channel coefficients. In order to resolve such "intersample interference", some kind of equalisation needs to be performed.

The way OFDM combats intersample interference is by dividing the total channel bandwidth into a number *D* of substantially smaller portions, called subchannels. One OFDM channel comprises one parallel use of all subchannels. The data to be transmitted is collected into so-called OFDM symbols, and each OFDM symbol is transmitted in parallel on a number $D_u$ ($0 < D_u \leq D$) of these subchannels. The transmitted subchannel signals are orthogonal to each other. Since the duration of one OFDM symbol is much longer than the sample interval, the problem of intersymbol interference is strongly reduced.

To get totally rid of intersymbol interference, a guard interval between two symbols is usually introduced during OFDM transmission. If the length of the guard interval exceeds the length of the channel impulse response, there is no residual intersymbol interference. Furthermore, if the guard interval is used in the form of a cyclic prefix, as is usually the case for OFDM transmission, one may implement a very simple equalisation of the frequency-selective channel in the frequency domain.

The wireless Local Area Networks (WLAN) systems are examples of radio communications systems which use OFDM. ETSI (European Telecommunication Standard) BRAN (Broadband Radio Access Network) has developed a short-range high-data-rate communications system called "HIPERLAN type 2" (HIPERLAN/2). HIPERLAN/2 may be used to transport Internet Protocol (IP) packets, and will also be capable to act as a wireless Asynchronous Transfer Mode (ATM) system, as well as a public access system, e.g. with an interface to the Universal Mobile Telecommunications System (UMTS). The physical layer of HIPERLAN/2 is based on OFDM, with a guard interval in the form of a cyclic prefix. Other WLAN systems based on OFDM have been standardised by ARIB in Japan (MMAC and its extensions), and IEEE in the US (IEEE802.11a and its extensions).

In pilot-assisted channel estimation schemes for OFDM, known symbols are transmitted on given subchannels and time instants for training purposes; for example, in systems according to the HIPERLAN/2 or to the IEEE802.11a standard, there are two full OFDM pilot symbols preceding every burst of data-carrying OFDM symbols. The principle of decision-directed approaches for OFDM is quite similar: before channel estimation, some data symbols are being decided; these decided symbols are then treated in the same way as pilot symbols.

The simplest channel estimation method consists in comparing a transmitted pilot symbol with the received value in the respective subchannel. The ratio between these two quantities then yields an estimated subchannel transfer factor. This method is known as the "least-squares estimation".

One may alternatively estimate the channel while using a decision-directed coherent demodulation, as disclosed in the paper by V. Mignone and A. Morello titled "CD3-OFDM: A Novel Demodulation Scheme for Fixed and Mobile Receivers", *IEEE Trans. Comm.*, vol. 44, No. 9, pp. 1144-1151, Sep. 1996. In this method, received signals are fed back after they have been corrected by means of a channel coding scheme (which needs to be fairly powerful in order to ensure stability). Two types of appropriate filters are discussed: the first one has a pre-set bandwidth which is flat in the time-domain (and is of the order of the guard interval): such a filter is therefore not matched to the actual channel excess delay as it optimally should. The second one has a bandwidth which is adaptively determined after the receiver has calculated the CIR by Fourier-transforming the CTF: but this conversion from the frequency-domain to the time-domain is computationally expensive.

A linear means for noise suppression in the described channel estimation process is a channel estimation filter exploiting correlations inside the channel transfer function, either in the frequency or in the time domain, or both. Assuming, for simplicity, that only correlations in the frequency domain shall be exploited in the OFDM signal, the characteristics of the channel transfer function over frequency can be regarded as a "band-limited" process. Band-limited means here that the transformation of the channel transfer function into the time-domain yields a CIR of limited length, i.e. the CIR length is substantially smaller than the OFDM symbol length. This usually holds for OFDM transmission systems.

Such an approach can be found in the paper by T. Onizawa et *al.* titled "A Simple Adaptive Channel Estimation Scheme for OFDM Systems", belonging to the same *Proceedings of the 50$^{th}$ IEEE Vehicular Technology Conference* (*VTC 1999-Fall*), pp. 279-283, Amsterdam, The Netherlands, September 1999. In this paper, a local channel variation metric is used to select the appropriate CEF for a given portion of the entire bandwidth. For this purpose, the length of the difference vector between adjacent subchannels in the preamble is exploited to classify the frequency-local channel variation into three classes, each class being associated with a respective CEF. This method for exploiting the magnitude of difference signals, however, is derived only in a heuristic fashion, so that the level of performance of this approach is not reliable.

Another example of a situation where adjusting the bandwidth of channel estimation filters is desirable concerns cellular systems based on Code-Division Multiple Access (CDMA). Wideband CDMA is used in the FDD (*Frequency Division Duplex*) mode of IMT 2000 *(International Mobile Telecommunication*)/UMTS (*Universal Mobile Tele-*

*communication System*). Also the *International Standard* IS-95, as well as evolutions thereof, are based on CDMA.

A CDMA system may be viewed as an overlay of several spread spectrum (SS) signals. A SS modulator combines the data symbols with a "spreading sequence" (also called "signature sequence" or "spreading code"), at a sampling frequency (or "chip frequency") higher than the symbol frequency, and feeds the resulting sequence of chips into a pulse-shaping filter. The baseband signal generated this way is mixed up to the desired frequency band for transmission.

In the receiver, the radio-frequency signal is mixed down to baseband and fed into a low-pass filter, which may be matched to the pulse-shaped chips. From the point of view of the receiver, the elements of the system situated before the pulse-shaping filter and after the chip-matched filter, taken together, can be considered as an "equivalent channel".

A well-known receiver structure for SS is the "rake demodulator". A rake demodulator has several branches. Each respective branch is fed with the signal delayed by a so-called "tap delay", with the difference between the tap delays for any two successive branches being fixed. The signal samples, called "channel taps", are next de-spread by a so-called "correlator" in each branch. Finally, the outputs of all branches are combined according to well-known techniques.

For more details about rake receivers, one may refer to the book "Digital Communications" by John G. Proakis, Fourth Edition, McGraw-Hill International Edition, New York and Singapore, 2001.

In the case of coherent demodulation, one usually applies so-called Maximum-Ratio Combining (MRC). This technique includes estimating channel taps of a reference signal, and using these estimates when combining all the branch outputs to obtain the demodulator output signal.

In particular, in SS systems that use at least one pilot signal for channel estimation, the pilot signal has a spreading sequence different from the data signal. In each branch, there is, after tap delaying, one correlator for the data and one correlator for the pilot signal.

A coarse estimate of the complex channel tap in a given branch is obtained at the output of the pilot correlator. However, this estimate usually includes a sizeable noise component. But since this noise has a large bandwidth, it is easily mitigated by a CEF. A CEF is therefore commonly provided for channel estimation in SS/CDMA receivers. If pilot symbols are transmitted in time-mutiplex with data symbols, one may associate with this CEF a functionality of interpolation with neighbouring data symbols. Moreover, a CEF reduces the impact of symbol decision errors in case one uses decision-directed channel estimation.

Now, when the transmitter is on board of a vehicle, each channel tap may vary more or less randomly. This variation presents some patterns which can be modelled to some extent. It is caused by the movement of either the transmitter or the receiver, or also by the environment reflecting the transmitted signal. The evolution of each channel tap over time can be regarded as a band-limited random process. It is important to note that the individual random processes for all branches might be different in general. The band limitation of each process is determined by the so-called Doppler bandwidth, or in general by the Doppler spectrum. It mainly depends on three terms, namely

a) the velocity of the transmitter, the receiver, or the scattering environment,
b) the RF channel frequency of the system, and
c) the directions of branch signals emerging from the transmitter and impinging on the receiver.

A CEF ideally adapted to the execution-time channel characteristics should be based on this Doppler spectrum. Since the Doppler spectrum is in general different from one branch to another, an optimal CEF should be adapted, individually for every branch, to the actual Doppler characteristics of the respective branch.

A major parameter characterising the Doppler spectrum is its bandwidth. Outside this bandwidth, the power contributions can be neglected. The optimum size of the CEF bandwidth should then be equal to the Doppler bandwidth of the considered branch. The problem here is that this Doppler bandwidth is unknown a priori to the receiver, and hence cannot be used in a straightforward manner to adapt the CEF bandwidth.

In known rake receivers, the filters are usually simple low-pass filters. Thus, the CEF bandwidth has to be pre-set to a conservative value according to the maximum Doppler bandwidth, or, equivalently, to the maximum expected velocity in all different possible application scenarios. But the range of mobile speed may be fairly wide, typically between 0 and 250 km/h, sometimes up to 500 km/h. This approach leads therefore in many cases to sub-optimal solutions where some noise-suppression potential is wasted.

Generally speaking, one object of the present invention is to estimate the bandwidth of the noiseless component of any chosen quantity derived from a received signal (possibly the received signal itself), with the help of a set of alternative filters of known bandwidths (or, equivalently, with the help of a unique, adjustable, filter).

Another object is to provide a method for selecting a filter out of a set of alternative filters (or, equivalently, for selecting the parameters of a unique, adjustable, filter) so as to obtain good noise-suppression from such a chosen quantity.

It is being assumed here that the bandwidth of the noise component of this chosen quantity is wider than the bandwidth of the noiseless component.

Furthermore, the invention aims at fulfilling these objects by relying on "intrinsic" methods, viz., methods based on applying "in real time" these filters to the chosen quantity, and on analysing the output of the filters.

Thus, according to a first aspect, the invention concerns, firstly, a method for bandwidth estimation in a data receiver, wherein said data receiver has been provided with a set of filters each having a known bandwidth and capable of removing noise from a quantity $Z_r$ derived from a received signal, the method comprising, for each one of these filters:

a) the application of the filter to $Z_r$, thus yielding a quantity $Z_F$,
b) the calculation of the power $\Delta$ of the difference between $Z_r$ and $Z_F$, and
c) the determination of whether the filter has truncated the noiseless component of $Z_r$, on the basis of a criterion involving $\Delta$ and $\hat{\sigma}_n^2$, where $\hat{\sigma}_n^2$ is an estimate of the power of the noise component of $Z_r$.

According to the same first aspect, the invention concerns, secondly, a method for adaptive filtering in a data receiver, wherein said data receiver has been provided with a set of filters capable of removing noise from a quantity $Z_r$ derived from a received signal, the method comprising:

a) for each one of these filters:

- the application of the filter to $Z_r$, thus yielding a quantity $Z_F$, and
- the calculation of the power $\Delta$ of the difference between $Z_r$ and $Z_F$, and

b) the selection of one filter out of the set on the basis of a criterion involving $\Delta$ and $\hat{\sigma}_n^2$, where $\hat{\sigma}_n^2$ is an estimate of the power of the noise component of $Z_r$, in such a way that the largest possible amount of noise is removed from $Z_r$ without truncating its noiseless component.

The criterion according to the invention is based on the expected noise power which should be removed from the "noisy" quantity $Z_r$ for a given filter. The noise power in the channel is assumed to have been estimated independently.

The set of filters may contain either very many filters allowing for a very accurate bandwidth adaptation, or, for the sake of simplicity, only a few filters. Naturally, the invention may equivalently be implemented by adjusting the coefficients of a tuneable filter by means of successive trials.

Compared to "extrinsic" adaptation methods which use a priori values (or, alternatively, require prior measurement operations), the present invention provides results derived from evaluations performed during the real-time functioning of the communications system. Furthermore, the method according to the invention requires a modest amount of computation, so that it is both convenient and accurate.

In a preferred embodiment, said criterion requires that the power $\Delta$ be of the same order of magnitude as $(\alpha\cdot\hat{\sigma}_n^2)$, where $\alpha$ is a number depending on the bandwidth of the respective filter and on the type of signal modulation being used.

Indeed, as shown below, this criterion leads to an optimal choice of filter in the case of several practically important types of signal modulations.

The present invention may for example advantageously be applied to channel estimation in the case of a time-dispersive channel.

In one such application, the type of signal modulation is OFDM, said quantity $z_r$ is a coarse estimate $\hat{\mathbf{H}}_{coarse}$ of the channel transfer factors vector, said quantity $Z_F$ is the filtered estimate $\hat{\mathbf{H}}_F$ of the channel transfer factors vector, and

$$\alpha = \frac{D_u}{2D}(D\text{-}D_F),$$

where D is the total number of subchannels, $D_u$ the number of subchannels actually used, and $D_F$ the length of the bandwidth of the respective filter as discretised in the time domain.

The invention allows in this case to estimate the excess delay of the CIR, and to achieve very good adaptive channel estimation by selecting the best CEF in the set in order to filter the CTF.

It will be noted that the invention exploits the (in coherent OFDM receivers mostly already available) coarse and filtered estimates of the channel transfer factor. Only a small additional computational load is thus required to implement the invention in the receiver.

In another example, the present invention may advantageously be applied to channel estimation in the case of a transmission over a channel subjected to Doppler fading.

In one such application, the type of signal modulation is Spread Spectrum (for example CDMA), the data receiver is a rake demodulator, said quantity $Z_r$ is a reference signal in a given branch of this rake demodulator, said quantity $Z_F$ is a channel tap estimate, and

$$\alpha = 1 - B,$$

where B is the equivalent noise bandwidth of the respective filter.

The equivalent noise bandwidth of a filter is associated with the behaviour of its impulse response $\phi(t)$ over time $t$; a precise definition will be given below.

The invention allows in this case to estimate the Doppler bandwidth per branch, and to achieve very good adaptive channel estimation by selecting, for each channel tap, the best CEF in the set in order to filter the outcome of the pilot correlator. As an alternative complexity-saving solution, it is also possible to adapt the filter to the largest of all branch Doppler bandwidths.

Clearly, for implementing the methods according to the invention, one needs to know the amount of noise contained in the received signal. The noise power can be evaluated by any known method. However, as a complement to the invention, the present disclosure will propose two methods for measuring noise power in systems where the transmitted signal includes a pilot signal, each method being adequate for a specific environment.

Firstly, in SS systems, said noise power estimate $\hat{\sigma}_n^2$ may be obtained by:

- high-pass or band-pass filtering of the pilot correlator output signal by means of a normalised filter (G) having a lower cut-off frequency at least as high as the maximum Doppler frequency that may occur at maximum transmitter speed,
- calculating the squared absolute value $|s|^2$ of the resulting filtered signal s, and
- applying an averaging filter (I) to $|s|^2$.

Secondly, if the pilot signal contains repeated sets of at least D amplitudes, a noise power estimate $\hat{\sigma}_n^2$ may be obtained from:

$$\hat{\sigma}_n^2 = \varepsilon \equiv \{|y_1 - y_2|^2\}/2D,$$

where said sets of pilot amplitudes are being collected in D-dimensional vectors **y**, and $\mathbf{y}_1$ and $\mathbf{y}_2$ are two different occurrences of the pilot set, with $\varepsilon$ denoting expectation value.

These methods for measuring the power of noise in the received signal are both reliable and easy to implement.

According to a second aspect, the invention concerns various devices.

It thus concerns, firstly, a time-dispersion estimation device including:

- a set of channel estimation filters, each capable of filtering a previously-obtained coarse estimate of the channel transfer factors vector,
- a CTF-summation unit capable of calculating the difference between the coarse estimate and the filtered estimate of the channel transfer factors vectors,
- a stopband-power unit capable of calculating the expectation value $\Delta$ of the modulus-squared of said difference, and
- a criterion unit capable of calculating the value of

$$C \equiv \Delta - b \cdot \alpha \cdot \hat{\sigma}_n^2,$$

where $\alpha$ is a number depending on the bandwidth of the respective filter, $\hat{\sigma}_n^2$ is an estimate of the noise power in the received signal, and b is a predetermined number of the order of 1.

The invention concerns, secondly, a Doppler estimation device including:

- a set of channel estimation filters, each capable of filtering a received pilot correlator output to yield a channel tap estimate,
- a tap-summation unit capable of calculating the difference between said pilot correlator output and said channel

tap estimate,

- a stopband-power unit capable of calculating the expectation value $\Delta_m$ of the modulus-squared of said difference, and
- a criterion unit capable of calculating the value of

$$C \equiv \Delta - b \cdot \alpha \cdot \hat{\sigma}_n^2,$$

where $\alpha$ is a number depending on the bandwidth of the respective filter, $\hat{\sigma}_n^2$ is an estimate of the noise power in the received signal, and b is a predetermined number of the order of 1.

The invention concerns, thirdly, a Doppler estimation device for a multiple-branch receiver, including, in each branch $m$ ($1 \le m \le L$):

- an identical set of channel estimation filters, wherein each filter is capable of filtering a received pilot correlator output to yield a channel tap estimate,
- a tap-summation unit capable of calculating the difference between said pilot correlator output and said channel tap estimate, and
- a stopband-power unit capable of calculating the expectation value $\Delta_m$ of the modulus-squared of said difference, and including a criterion unit capable of calculating, when an identical filter is put in each branch $m$ of the receiver, the value of

$$C \equiv \frac{1}{L}\left[\sum_{m=1}^{L} \Delta_m\right] - b \cdot \alpha \cdot \hat{\sigma}_n^2 ,$$

where $\alpha$ is a number depending on the bandwidth of the respective filter, $\hat{\sigma}_n^2$ is an estimate of the noise power in the received signal, and $b$ is a predetermined number of the order of 1.

The invention concerns, fourthly, a noise-power estimation device, wherein the transmitted signal includes a pilot signal containing repeated sets of at least $D$ amplitudes, including:

- a pilot-summation unit capable of calculating the difference between two received D-dimensional pilot vectors $\mathbf{y}_1$ and $\mathbf{y}_2$, and
- a noise variance unit capable of calculating a noise power estimate according to:

$$\hat{\sigma}_n^2 = \varepsilon\{|y_1 - y_2|^2\}/2D,$$

where $\varepsilon$ denotes expectation value.

The invention also relates to:

- a modulated-signal reception apparatus including at least one device as succinctly described above,
- a telecommunications network including at least one reception apparatus as succinctly described above,
- a data storage means containing computer program code instructions for executing steps of anyone method as succinctly described above, and
- a computer program containing instructions such that, when said program controls a programmable data processing device, said instructions mean that said data processing device implements anyone method as succinctly described above.

The advantages offered by these devices, apparatus, telecommunications networks, data storage means and computer programs are essentially the same as those offered by the methods according to the invention.

Other aspects and advantages of the invention will emerge from a reading of the detailed description, which will be found below, of preferred embodiments given by way of non-limitative example. This description refers to the accompanying drawings, in which:

- Figure 1 is a diagram illustrating the standard time-domain structure of an OFDM preamble,
- Figure 2 depicts schematically a time-dispersion estimation device according to a first embodiment of the invention,

and also a suitable noise power estimator,

- Figure 3 depicts schematically the conventional functioning of a rake demodulator,
- Figure 4 depicts schematically a Doppler estimation device according to a second embodiment of the invention, and also a suitable noise power estimator, and
- Figure 5 is a flow diagram illustrating the main steps leading to the adaptive selection of an optimal channel estimation filter according to either the first or the second embodiment of the invention.

Two preferred embodiments of the invention will be described in detail below. The first embodiment concerns OFDM modulation schemes, and the second embodiment concerns SS/CDMA communications systems.

FIRST EMBODIMENT OF THE INVENTION

For introduction, consider the transmission of one single OFDM symbol generated with a *D*-dimensional Inverse Discrete Fourier Transform (IDFT). Each of the *D* subchannels is modulated by a complex-valued amplitude $A_\mu[\upsilon]$, where ν is the subchannel number $(0 \le \upsilon < D)$ representing subchannel frequency, and μ indicates the OFDM symbol number representing transmission time. The data are mapped on the subchannel amplitudes $A_\mu[\upsilon]$. The OFDM symbol is equipped with a guard interval of $D_g$ samples. The discrete-time complex baseband OFDM transmitted signal $\mathbf{a}_\mu$ for OFDM symbol number μ, when written out as a vector over discretised time p, with: $-D_g \le \rho < D$, has the following components:

$$a_\mu[\rho] = \frac{1}{\sqrt{D}} \sum_{\upsilon=0}^{D-1} A_\mu[\upsilon]\, e^{+j\frac{2\pi}{D}\upsilon\rho} \quad , \qquad (1)$$

which can be generated by an IDFT of dimension *D*.

Using ε to denote expectation value (computed over a set of samples), the average signal power is

$$\sigma_s^2 \equiv \varepsilon\left\{\left|a_\mu[\rho]\right|^2\right\} = \frac{E_s}{T} \quad ,$$

where $E_s$ is the average energy per channel symbol and *T* is the modulation interval.

For convenient notation, the symbol index μ, will be suppressed in the following.

We assume transmission over a multipath channel, whose CIR will be modelled, during the transmission of each OFDM symbol, by means of a discrete-time vector **h** having components $h[\rho]$ ($\rho = 0,..., D-1$). The fact that the continuous-time CIR is non-zero only up to the excess delay τ is equivalent to having only the components h[p] with p = 0,..., $D_e$-1 (where $D_e$ is the discretised excess delay of the CIR) being non-zero.

As discussed in the introduction, the noiseless received signal is given by

$$\tilde{\mathbf{y}} = \mathbf{a} * \mathbf{h} \ ,$$

where * denotes circular convolution.

For convenient notation, without loss of generality, perfect frequency synchronisation will be assumed in the receiver. At the receiver input, samples n[p] of Additive White Gaussian Noise (AWGN) corrupt the noiseless signal samples $\tilde{y}[\rho]$ to yield the actually-received samples

$$y[\rho] = \tilde{y}[\rho] + n[\rho].$$

The noise power is

$$\sigma_n^2 \equiv \varepsilon\,\{|n[\rho]|^2\} = \frac{N_0}{T} \ ,$$

where $N_0$ is the "one-sided power spectral density" of the white noise. The channel Signal-to-Noise power Ratio (SNR) at the receiver input is thus

$$E_s/N_0 = \sigma_s^2/\sigma_n^2.$$

Implementing a Discrete Fourier Transform (DFT), one defines the discrete Channel Transfer Factor (CTF) at subchannel υ as

$$H[\upsilon] \equiv \sum_{\rho=0}^{D-1} h[\rho]\, e^{-j\frac{2\pi}{D}\upsilon\rho} \quad . \tag{2}$$

The OFDM receiver yields the noisy subchannel amplitudes via DFT processing as

$$Y[\upsilon] = \frac{1}{\sqrt{D}} \sum_{\rho=0}^{D-1} y[\rho]\, e^{-j\frac{2\pi}{D}\upsilon\rho}$$

$$= \tilde{Y}[\upsilon] + N[\upsilon] \ ,$$

where

$$\tilde{Y}[\upsilon] \equiv A[\upsilon] \ H[\upsilon]$$

is the noiseless received subchannel amplitude, and $N[\upsilon]$ is the resulting noise sample on subchannel v. Here we assumed that the guard interval $D_g$ is sufficiently large so that the linear convolution of the transmitted OFDM signal and the CIR is equal to their circular convolution in the time interval of interest.

It is obvious from Equation (3) that for data recovery from $Y[\upsilon]$, an estimate of $H[\upsilon]$ is required.

We shall now describe, as an example of a method which can be implemented in the receiver to obtain a coarse estimate of $H[\upsilon]$ within the framework of the present invention, the known "least-squares" estimation method.

The active subchannel positions will be referred to by the subchannel indices ν which belong to a set $U$ containing the $D_u$ indices of these positions. The remaining ($D$ - $D_u$) subchannels, namely the ones in which the modulation amplitude is set to zero, are usually called "virtual" subchannels.

We shall assume that, for so-called training purposes, a preamble symbol containing known subchannel amplitudes covering the entire active frequency-domain is provided; we will collect these amplitudes in a vector $\mathbf{A}_\rho$ of length $D_u$.

) The transmitted time-domain preamble (or pilot) OFDM symbol is depicted in the upper part of **Figure 1**. The repeatedly transmitted time-domain sequence of length D is obtained by the IDFT

$$a_\rho = \frac{1}{\sqrt{D}} 1\ D_u^{\dagger} A_\rho, \ (4) \tag{4}$$

where we introduced the $D_u$ x D partial DFT matrix

$$\mathbf{D}_u = \left[ e^{-j\frac{2\pi}{D}\upsilon\rho} \right]_{\substack{\upsilon\in U \\ \rho\in\{0,\ldots,D-1\}}} \quad , \tag{5}$$

and †denotes the conjugate transpose of a matrix.

The sample sequence resulting from the convolution of the transmitted preamble sample sequence with the CIR **h** is disturbed by additive noise. Since the guard interval and the repeated preamble, which are assumed to be of sufficient size, are both cyclic, the linear convolution is equal to the circular convolution for these signal segments which are of interest for final demodulation. Thus, the noiseless received sequence $\tilde{y}_p$, of length *D* is equal to the circular convolution of $\mathbf{a}_p$ and **h**.

In the lower part of Figure 1, the temporal structure of the received signal is indicated. Perfect channel frequency synchronisation has been assumed. The successive received sequences $\mathbf{y}_1$, $\mathbf{y}_2$, and so on, are made of the repeated noiseless sequence $\tilde{y}_p$ disturbed respectively by the (statistically independent) successive D-dimensional noise vectors $n_1$, $n_2$, and so on.

Implementing a DFT, we find:

$$\tilde{\mathbf{Y}}_p \equiv \frac{1}{\sqrt{D}} \mathbf{D}_u \tilde{\mathbf{y}}_p = \text{diag}\,\{ \frac{1}{\sqrt{D}}\ \mathbf{D}_u\, \mathbf{a}_p \}\cdot\ \mathbf{D}_u\, \mathbf{h} = \text{diag}\,\{\, \mathbf{A}_p \,\}\cdot \mathbf{H} = \mathbf{A}\cdot\mathbf{H}\ , \qquad (6)$$

where we collected the $D_u$ channel transfer factors $H[\upsilon]$ ($v \in U$) in the column vector

$$H \equiv D_u\, h\ , \qquad (7)$$

and we collected the transmitted pilot subchannel amplitudes in the $D_u$ x $D_u$ diagonal matrix

$$A \equiv \text{diag}\{A_p\}. \qquad (8)$$

Each received sequence is of the form:

$$\mathbf{y}_p = \tilde{\mathbf{y}}_p + \mathbf{n}\ , \qquad (9)$$

where n is a noise vector.

This received signal $\mathbf{y}_p$ is transformed into frequency domain via the DFT

$$Y_p \equiv \frac{1}{\sqrt{D}} D_u y_p = A\cdot H + \frac{1}{\sqrt{D}} D_u\ n = A\cdot H + N, \qquad (10)$$

where we used Equation (6), and we introduced the $D_u$ -dimensional frequency-domain noise vector **N**.

Finally, the "least-squares estimate" $\mathbf{H}_{LS}$ of the CTF vector is obtained by dividing out the frequency-domain received signal by the pilot subchannel amplitudes:

$$\hat{\mathbf{H}}_{LS} = \mathbf{A}^{-1}\, \mathbf{Y}_p\ . \qquad (11)$$

This operation can be seen as extracting or removing the influence of the transmitted pilot amplitudes from the received signal.

The least-squares estimation method just described is only one possible way to obtain a coarse estimate of the CTF. Once a coarse estimate $\hat{\mathbf{H}}_{coarse}$ has been obtained, filtering of $\hat{\mathbf{H}}_{coarse}$ by the CEF yields the filtered estimate $\hat{\mathbf{H}}_F$ of the CTF vector. The filters used in the framework of the present invention are assumed to be normalised in such a way that there is neither an amplification nor an attenuation in the passband; in other words, one tries, when designing a filter, to have the parts in the filter input signal which belong to the filter passband be equal to the corresponding parts

in the filter output signal, up to signal distortions introduced by the filter itself. Then, a "good" filter is a filter which, besides introducing negligible distortions, is characterised by a passband which is well-adjusted to the noiseless signal characteristics.

We shall now describe a method according to the invention for estimating the effective length $D_e$ of the CIR on the basis of the measurement of power in the stopband subspace of the filter. Shortly speaking, one obtains to begin with, for example in the above-described manner, a coarse estimate $\hat{\mathbf{H}}_{coarse}$ of the CTF vector: this estimate plays here the role of a quantity $Z_r$ representing the received signal. Several different channel estimation filters, each having a discretised bandwidth of respective length $D_F$, are then applied to $Z_r$ in order to obtain respective quantities $Z_F$, namely the filtered estimates $\hat{\mathbf{H}}_F$. Finally, one computes the expectation value (averaged over frequency) of the difference between the filter "input" $\hat{\mathbf{H}}_{coarse}$, and the "output" $\hat{\mathbf{H}}_F$ of each filter. The derivation below leads to a decision criterion for choosing the best filter in the set on the basis of the values thus computed, and shows by the same token how an estimate for the CIR length can be obtained.

Consider, for any given filter, the expectation value Δ of the difference between the "coarse" and the "filtered" estimates of the CTF:

$$\Delta \equiv \varepsilon \left\{ \left| \hat{\mathbf{H}}_{coarse} - \hat{\mathbf{H}}_F \right|^2 \right\}, \qquad (12)$$

where averaging over the $D_u$ components of the CTF vectors is implied. Since $\hat{\mathbf{H}}_F$ results, by definition, from the filtering of $\hat{\mathbf{H}}_{coarse}$ this quantity Δ can be interpreted as the average power in the stopband subspace of the CEF.

Furthermore, Δ can be written as:

$$\Delta = P_n + P_t \,. \; (13) \qquad (13)$$

Indeed, the power Δ consists of two components. The first component is the noise power $P_n$ in the stopband subspace of the filter, which is thus removed thanks to the filter. The second component is the tail power $P_t$ in the portion of the CIR which has been truncated by the CEF in the case where the length $D_F$ of the filter is shorter than the excess delay $D_e$ of the CIR; in order to make $P_t$ zero, as it should optimally, one needs then to make $D_F$ larger than $D_e$. However, making $D_F$ too large results in an inefficient noise removal.

We shall assume that these two power components are uncorrelated, and also that the components h[p] of the CIR are uncorrelated. We shall also assume that the CEF is "perfect" in the sense that it is able to extract the $D_F$ components of the CIR which are located in the bandwidth of the CEF without any distortion. Also, the noise afflicting the received signal will be assumed to be white noise. Finally, the pilot subchannel amplitudes will be assumed to correspond to points on the unit circle, i.e., $\mathbf{AA}^\dagger = \mathbf{I}$.

After some calculus, one finds then:

$$P_n \approx \frac{1}{2} \sigma_n^2 \frac{D_u}{D} (D - D_F), \qquad (14)$$

and

$$P_t = D_u \sum_{\rho = D_F + 1}^{D-1} \varepsilon \left\{ \left| h[\rho] \right|^2 \right\}.$$

Therefore, taking, for the purpose of this first embodiment:

$$\alpha = \frac{D_u}{2D} (D - D_F), \; (16) \qquad (16)$$

the sought-for criterion reads:

- if: $\Delta - \alpha \cdot \sigma_n^2 > 0$,
  then: $D_e > D_F$, and
- if: $\Delta - x \cdot \sigma_n^2 = 0$,
  then: $D_e \leq D_F$.

In practice, the value of the noise power must be measured in one way or another, and the criterion as implemented will actually use the value $\hat{\sigma}_n^2$ resulting from this measurement.

The above criterion has been derived on the basis of a few idealistic assumptions. Now taking practical impairments into account, the time-dispersion classification should preferably be defined as follows:

- if: $C > q$, then: $D_e > D_F$, and (17a)
- if: $C \leq q$, then: $D_e \leq D_F$, (17b)

where:

$$C \equiv \Delta - b \cdot \alpha \cdot \hat{\sigma}_n^2 . \qquad (17c)$$

In Equations (17a-c), the factor b accounts for the filter not being perfect, and q can be used to influence the threshold decision. Usually, $1 \leq b \leq 2$ and $q \approx 0$ are reasonable values. The factor b is required due to the perfect-filter assumption, which disregards the passband distortion by the filter, as well as the imperfect stopband behaviour, and the non-ideal transition region between pass- and stopband. Furthermore, the filter transients in the proximity of subchannels without an available pilot are neglected in theory. The imperfect filter characteristic leads to an actual value for Δ which is higher than is expected in our theory, so that the theoretical difference power needs to be increased by this factor *b*.

An exemplary device (100) for implementing this first embodiment of the invention is schematically depicted in **Figure 2**.

A received pilot sequence is Fourier-transformed, according to Equation (10), in unit (102), after which a least-squares estimate of the CTF vector is obtained by "removing pilot amplitudes", according to Equation (11 ), in unit (103).

The following steps are implemented for each filter in a set (104) of channel estimation filters. First, the least-squares estimate of the CTF vector is filtered by this filter. The difference between these two estimates is calculated in CTF-summation unit (105), after which the power Δ of this difference is calculated in stopband-power unit (106). Finally, after reading the value of α for this particular filter and an estimate for the noise power in the received signal provided by noise-power estimator (200), criterion unit (107) calculates the value of *C* associated with this filter.

A method, based on this criterion, leading to the selection of the optimal CEF will be described below in reference to Figure 5.

A method to estimate said noise power in the present context will now be described.

Let us refer again to Figure 1. Exploiting the fact that the useful signal portion is identical in the two received signal parts of the repeated preamble, and using previous assumptions and definitions, one derives easily:

$$\varepsilon\{|y_1 - y_2| = 2D\hat{\sigma}_n^2.$$

Hence, a noise variance estimate is obtained by

$$\hat{\sigma}_n^2 = \varepsilon\{|y_1 - y_2|^2\}/2D, \ (18) \qquad (18)$$

where the expectation value is computed in the time domain.

Clearly, it is not compulsory to use the entire vectors $\mathbf{y}_1$ and $\mathbf{y}_2$; any subvectors of $\mathbf{y}_1$ and $\mathbf{y}_2$ could actually be used in order to estimate the noise variance.

It is to be noted that this estimator is not limited to OFDM preambles; it can as well be used with repeated single-channel preambles. Generally speaking, applications of this noise power estimator are not limited to its combination with the channel estimation according to the invention, the only requirement for its applicability being the existence of a repetition preamble. For example, it can also be used for link-quality control and adaptation.

Going back to Figure 2, one finds, correspondingly, a schematic illustration of a device (200) for noise power estimation which can be implemented in a communications system using a repetition preamble. The difference between two received preamble vectors is calculated in pilot-summation unit (201), and is used in noise variance unit (202) to

calculate an estimate for the noise power in the received signal, according to Equation (18). In the present context, this noise estimate is finally passed on to criterion unit (107) for the purpose of calculating the criterion according to the invention, as described above.

It should be noted that the existence of a repetition preamble is here required only when implementing this noise power estimator. If a noise variance estimate is obtainable from some other source, then the time-dispersion estimator according to the invention does not require a repetition preamble.

<u>SECOND EMBODIMENT OF THE INVENTION</u>

**Figure 3** depicts schematically the conventional functioning of a rake demodulator, in the case of SS systems that use at least one pilot signal for channel estimation.

After being filtered by a chip-matched filter in unit (301), the baseband received signal is dispatched between the different branches of the rake receiver. The signal in each branch m is suitably delayed in unit (302). Then data and pilot symbols are sent to their respective correlators (303) and (304).

The output of the pilot correlator (304) is made of symbols separated by time-intervals $T_p$. Each of these symbols can be written as

$$x_m = g_m + n_m, \text{ (19)} \tag{19}$$

where $g_m$ and $n_m$ denote the ideally-noiseless channel tap, and the noise (assumed to be AWGN) respectively. For convenience, the time index is suppressed here and in the following.

The filtering of $x_m$ by a low-pass filter in unit (305) yields the channel tap estimate $g_m$, which can be expressed as the convolution of $x_m$ with the impulse response $\phi$ of this CEF:

$$g_m = g_m * \phi + n_m * \phi. \text{ (20)} \tag{20}$$

The complex conjugate of this estimate is calculated in unit (306) and is multiplied, in unit (308), by the output of the data correlator (303) after the latter has preferably received compensation, in unit (307), of the group delay caused by the CEF. Finally, the resulting signals in all branches are summed up in unit (309).

We shall now present a derivation leading to the criterion for filter selection according to this second embodiment of the invention.

This selection is performed after symbol $x_m$, which plays here the role of a quantity $Z_r$ representing the received signal, has come out of the pilot correlator (304), and before the corresponding channel tap estimate $\hat{g}_m$, which plays here the role of a quantity $Z_F$ resulting from the filtering of $Z_r$, enters unit (306).

Consider then the expectation value $\Delta_m$ of the difference between the input $x_m$ and the output $\hat{g}_m$ of the channel estimation filter:

$$\Delta_m \equiv \varepsilon\left\{\left|x_m - \hat{g}_m\right|^2\right\} . \tag{21}$$

As in the first embodiment of the invention, this quantity $\Delta$ can be interpreted as the *average power in the stopband subspace* of the CEF.

Using Equations (19) and (20), one gets

$$\Delta_m = \varepsilon\left\{\left|g_m - g_m * \phi\right|^2\right\} + \varepsilon\left\{\left|n_m - n_m * \phi\right|^2\right\} . \tag{22}$$

With the assumption of the noise being white noise, the last term in Equation (22) is simply calculated as

$$\varepsilon\left\{\left|n_m - n_m * \phi\right|^2\right\} = \sigma_n^2 (1 - B) , \tag{23}$$

where $\sigma_n^2$ denotes the power of the noise $n_m$, and $B$ is the "equivalent noise bandwidth" of the filter, which can be defined as

$$B \equiv \frac{\sum_\rho |\phi[\rho]|^2}{|\sum_\rho \phi[\rho]|^2} \tag{24}$$

and is always comprised between 0 and 1. It is assumed here, as in the first embodiment, that the filter response is normalised, so that the input signal is neither attenuated nor amplified in the passband of the filter.

The term $\varepsilon\{|g_m - g_m * \phi|^2\}$ can be viewed as a measure of the distortion of the noiseless signal waveform by the filter. If we were dealing with a filter having constant magnitude response and constant group delay in its passband up to its cut-off frequency, this cut-off frequency would be equal to ($B/2\ T_p$). In this ideal case:

$$\varepsilon\ \{|g_m - g_m * \phi|^2\} = 0 \text{ for } (B/2T_p) \geq f_D, \tag{25a}$$

and

$$\varepsilon\{|g_m - g_m * \phi|^2\} > 0 \text{ for } (B/2T_p) < f_D, \tag{25b}$$

where $f_D$ denotes the maximum Doppler frequency (corresponding to a Doppler bandwidth of $2f_D$).

In practice, the best filter in the available set will therefore be the one having the smallest bandwidth among those who verify:

$$C \leq q, \tag{26a}$$

where

$$C \equiv \Delta_m - b \cdot \alpha \cdot \hat{\sigma}_n^2, \tag{26b}$$

and

$$\alpha = 1 - B \tag{26c}$$

The parameters b and q appearing here are analogous to the ones introduced in the first embodiment. It should be noted that $C$ may become negative due to estimation errors.

An exemplary device (400) for implementing this second embodiment of the invention is schematically depicted in **Figure 4**.

The following steps are implemented for each filter in the set. First, the difference between $X_m$ and $\hat{g}_m$ is calculated in tap-summation unit (401), after which the power $\Delta_m$ of this difference is calculated in stopband-power unit (402). Finally, after reading the value of this power and of the parameter $\alpha$ for this particular filter, and an estimate for the noise power in the received signal provided by noise-power estimator (500), criterion unit (403) calculates the value of $C$ associated with this filter.

The filter selection method described so far evaluates the signals in any single branch of a receiver. It may however be reasonable, when the receiver, for example a rake receiver, has multiple branches, to assume the same Doppler bandwidth as well as noise spectrum in all branches. The accuracy of the filter selection scheme can, therefore, be increased by considering all branches in a parallel computation, assuming one puts an identical filter in each branch of the receiver. In this case, preferably, the respective value of the power $\Delta_m$ for each of the $L$ branches will be input

to criterion unit (403), and the decision variable to be evaluated in the Doppler estimation device (400') for each available type of filter will be:

$$C \equiv \frac{1}{L}\left[\ \sum_{m=1}^{L}\Delta_m\ \right] - b\cdot\alpha\cdot\hat{\sigma}_n^2\ , \qquad (26b')$$

rather than Equation (26b).

The present embodiment of the invention can be applied to any SS communications scheme, even if it does not use actual CDMA for user multiple access. This is, for instance, true for IEEE802.11, where SS is used with channel-sense multiple access, but without CDMA in the sense of simultaneous overlay of SS signals. This embodiment can also be applied to any SS system that uses channel estimation filters, even if it does not use training symbols; for instance, it may be used with decision-directed channel estimation.

Finally, it should be noted that even though, for convenience sake, the above discussion dealt with a rake receiver without interference cancellation, the present invention is not restricted to such a receiver. Generally speaking, this embodiment of the invention exploits the temporal correlations in a channel estimate in order to achieve improved noise-suppression for channel estimation. Any kind of post-processing that makes use of a channel estimate can thus benefit from the invention. The standard linear rake receiver (having combining weights equal to the complex conjugate of the tap weights) was only presented above as one example of how the invention may be usefully implemented.

A method, based on the above-derived criterion, leading to the selection of the optimal CEF will be described below in reference to Figure 5. This method for adaptive channel estimation is based on the use of a multiplicity of low-pass filters, whose bandwidths are predetermined and scaled by reasonable steps, so as to cover the whole range of possible Doppler bandwidths. Actually, considerable improvement can already be expected by using just two or three alternative filters; for example, for a system with maximum Doppler bandwidth of 300 Hz, a choice of filter bandwidths with three alternative filters might be: 300 Hz,150 Hz and 50 Hz.

This second embodiment of the invention requires a noise power estimate. Going back to Figure 4, one finds a schematic illustration of a device (500) for noise power estimation in a band-limited signal.

First, the pilot correlator output signal $x_m$ is filtered by means of a high- or band-pass filter (G) in unit (501) (it will be assumed below that this filter is normalised so that the sum of the absolute value squared of the filter coefficients is equal to one). Filter (G) shall have a lower cut-off frequency at least as high as the maximum Doppler frequency that may occur at maximum mobile speed.

The absolute value squared of the resulting signal is next calculated in unit (502), and submitted to an averaging filter (I) in unit (503). The noise power estimate $\sigma_n^2$ for the symbol-spaced signal is then equal to the output of this averaging filter (I).

The accuracy of this noise power estimate can obviously be improved, for a multiple-branch receiver, by averaging the branch noise power estimates over several, or all branches.

## FILTER SELECTION ALGORITHM

**Figure 5** is a flow diagram illustrating the main steps of an exemplary process leading to the selection of an optimal channel estimation filter according to the invention. For simplicity sake, we shall consider only the case (actually rather general) where the optimal CEF is such that the power $\Delta$ is of the order of $(\alpha\cdot\hat{\sigma}_n^2)$, so that the criterion of Equation (26a), with the appropriate values of $\alpha$, *b* and *q*, is applicable.

The receiver has at its disposal a set of *k* filters, which will conveniently be labelled in the order of *increasing filter bandwidth*. For example, in the above-described embodiments of the invention, this means increasing value of $D_F$ for the first embodiment, and increasing values of *B* for the second one.

The selection process is initialised at step 601 by assigning the value zero to a counter *i*. This counter is incremented at step 602 and will serve in the following as filter label. During step 603, the value $C_i$ of *C* for filter *i* is calculated using appropriate methods; for example in the case of the above-described embodiments, one may use the methods described in reference to Figure 2 and Figure 4 respectively. During step 604, this number $C_i$ is compared to a predetermined number *q*. If $C_i$ is larger than q, and if, as checked at step 605, there remains at least one yet untested filter in the available set, then the filter under consideration is considered as not optimal, and one goes back to step 602. If, on the other hand, either $C_i$ is smaller than *q* (or equal to *q* within the precision of the computation), or the filter under consideration is the last one, then, during step 606, this filter is taken to be the optimal filter and the process is stopped.

## Claims

1. A method for bandwidth estimation in a data receiver, wherein said data receiver has been provided with a set of filters each having a known bandwidth and capable of removing noise from a quantity $Z_r$ derived from a received signal, the method comprising, for each one of these filters:

   a) the application of the filter to $Z_r$, thus yielding a quantity $Z_F$,
   b) the calculation of the power $\Delta$ of the difference between $Z_r$ and $Z_F$, and
   c) the determination of whether the filter truncated the noiseless component of $Z_r$, on the basis of a criterion involving $\Delta$ and $\hat{\sigma}_n^2$, where $\hat{\sigma}_n^2$ is an estimate of the power of the noise component of $Z_r$.

2. A method for adaptive filtering in a data receiver, wherein said data receiver has been provided with a set of filters capable of removing noise from a quantity $Z_r$ derived from a received signal, the method comprising:

   a) for each one of these filters:

   - the application of the filter to $Z_r$, thus yielding a quantity $Z_F$, and
   - the calculation of the power $\Delta$ of the difference between $Z_r$ and $Z_F$, and

   b) the selection of one filter out of the set on the basis of a criterion involving $\Delta$ and $\hat{\sigma}_n^2$, where $\hat{\sigma}_n^2$ is an estimate of the power of the noise component of $z_r$, in such a way that the largest possible amount of noise is removed from $z_r$ without truncating its noiseless component.

3. A method according to Claim 1 or Claim 2, **characterised in that** said criterion requires that the power $\Delta$ be of the same order of magnitude as $(\alpha \cdot \sigma^2_n)$, where $\alpha$ is a number depending on the bandwidth of the respective filter and on the type of signal modulation being used.

4. A method according to Claim 3, **characterised in that** said type of signal modulation is OFDM, said quantity $Z_r$ is a coarse estimate $\mathbf{H}_{coarse}$ of the channel transfer factors vector, said quantity $Z_F$ is the filtered estimate $\hat{\mathbf{H}}_F$ of the channel transfer factors vector, and

$$\alpha = \frac{D_u}{2D}(D - D_F).$$

   where $D$ is the total number of subchannels, $D_u$ the number of subchannels actually used, and $D_F$ the length of the bandwidth of the respective filter as discretised in the time domain.

5. A method according to Claim 3, **characterised in that** said type of signal modulation is Spread Spectrum, the data receiver is a rake demodulator, said quantity $Z_r$ is a reference signal in a given branch of this rake demodulator, said quantity $Z_F$ is a channel tap estimate, and

$$\alpha = 1 - B,$$

   where B is the equivalent noise bandwidth of the respective filter.

6. A method according to Claim 5, wherein the transmitted signal includes a pilot signal, **characterised in that** said noise power estimate $\hat{\sigma}_n^2$ is obtained by:

   - high-pass or band-pass filtering of the pilot correlator output signal by means of a normalised filter (G) having a lower cut-off frequency at least as high as the maximum Doppler frequency that may occur at maximum transmitter speed,
   - calculating the squared absolute value $|s|^2$ of the resulting filtered signal s, and
   - applying an averaging filter (I) to $|s|^2$.

7. A method for measuring noise power in a received signal, wherein the transmitted signal includes a pilot signal containing repeated sets of at least $D$ amplitudes, **characterised in that** a noise power estimate $\hat{\sigma}_n^2$ is obtained

from:

$$\hat{\sigma}_n^2 = \varepsilon\{| y_1 - y_2 |^2\}/2D,$$

where said sets of pilot amplitudes are being collected in D-dimensional vectors **y**, and $\mathbf{y}_1$ and $\mathbf{y}_2$ are two different occurrences of the pilot set, with ε denoting expectation value.

**8.** A time-dispersion estimation device (100), including:

- a set (104) of channel estimation filters, each capable of filtering a previously-obtained coarse estimate of the channel transfer factors vector,
- a CTF-summation unit (105) capable of calculating the difference between the coarse estimate and the filtered estimate of the channel transfer factors vectors,
- a stopband-power unit (106) capable of calculating the expectation value Δ of the modulus-squared of said difference, and
- a criterion unit (107) capable of calculating the value of

$$C \equiv \Delta - b\cdot\alpha\cdot\hat{\sigma}_n^2,$$

where α is a number depending on the bandwidth of the respective filter, $\hat{\sigma}_n^2$ is an estimate of the noise power in the received signal, and b is a predetermined number of the order of 1.

**9.** A Doppler estimation device (400), including:

- a set (305) of channel estimation filters, each capable of filtering a received pilot correlator output to yield a channel tap estimate,
- a tap-summation unit (401) capable of calculating the difference between said pilot correlator output and said channel tap estimate,
- a stopband-power unit (402) capable of calculating the expectation value Δ of the modulus-squared of said difference, and
- a criterion unit (403) capable of calculating the value of

$$C \equiv \Delta - b\cdot\alpha\cdot\hat{\sigma}_n^2,$$

where α is a number depending on the bandwidth of the respective filter, $\hat{\sigma}_n^2$ is an estimate of the noise power in the received signal, and b is a predetermined number of the order of 1.

**10.** A Doppler estimation device (400') for a multiple-branch receiver, including, in each branch *m* ($1 \leq m \leq L$):

- an identical set (305) of channel estimation filters, wherein each filter is capable of filtering a received pilot correlator output to yield a channel tap estimate,
- a tap-summation unit (401) capable of calculating the difference between said pilot correlator output and said channel tap estimate, and
- a stopband-power unit (402) capable of calculating the expectation value $\Delta_m$ of the modulus-squared of said difference, and including a criterion unit (403) capable of calculating, when an identical filter is put in each branch m of the receiver, the value of

$$C \equiv \frac{1}{L}\left[\sum_{m=1}^{L}\Delta_m\right] - b\cdot\alpha\cdot\hat{\sigma}_n^2 ,$$

where α is a number depending on the bandwidth of the respective filter, $\hat{\sigma}_n^2$ is an estimate of the noise power in the received signal, and b is a predetermined number of the order of 1.

**11.** A noise-power estimation device (200), wherein the transmitted signal includes a pilot signal containing repeated sets of at least *D* amplitudes, including:

- a pilot-summation unit (201) capable of calculating the difference between two received *D*-dimensional pilot vectors $\mathbf{y}_1$ and $\mathbf{y}_2$, and
- a noise variance unit (202) capable of calculating a noise power estimate according to:

$$\hat{\sigma}_n^2 = \varepsilon\{|y_1 - y2|^2\}/2D,$$

where ε denotes expectation value.

**12.** A modulated-signal reception apparatus, **characterised in that** it includes at least one device according to Claim 8 and/or Claim 9 and/or Claim 10 and/or Claim 11.

**13.** A telecommunications network, **characterised in that** it includes at least one reception apparatus according to Claim 12.

**14.** A data storage means, **characterised in that** it contains computer program code instructions for executing steps of a method according to any one of Claims 1 to 7.

**15.** A data storage means according to Claim 14, **characterised in that** it is partially or totally removable.

**16.** A computer program, **characterised in that** it contains instructions such that, when said program controls a programmable data processing device, said instructions mean that said data processing device implements a method according to any one of Claims 1 to 7.

Fig.1

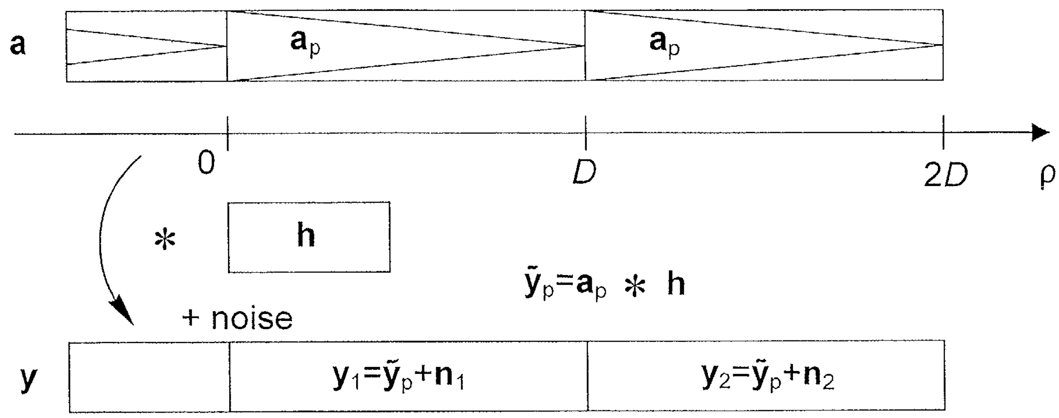
a
a_p
a_p
0
D
2D
ρ
*
h
ỹ_p=a_p * h
+ noise
y
y_1=ỹ_p+n_1
y_2=ỹ_p+n_2

Fig.2

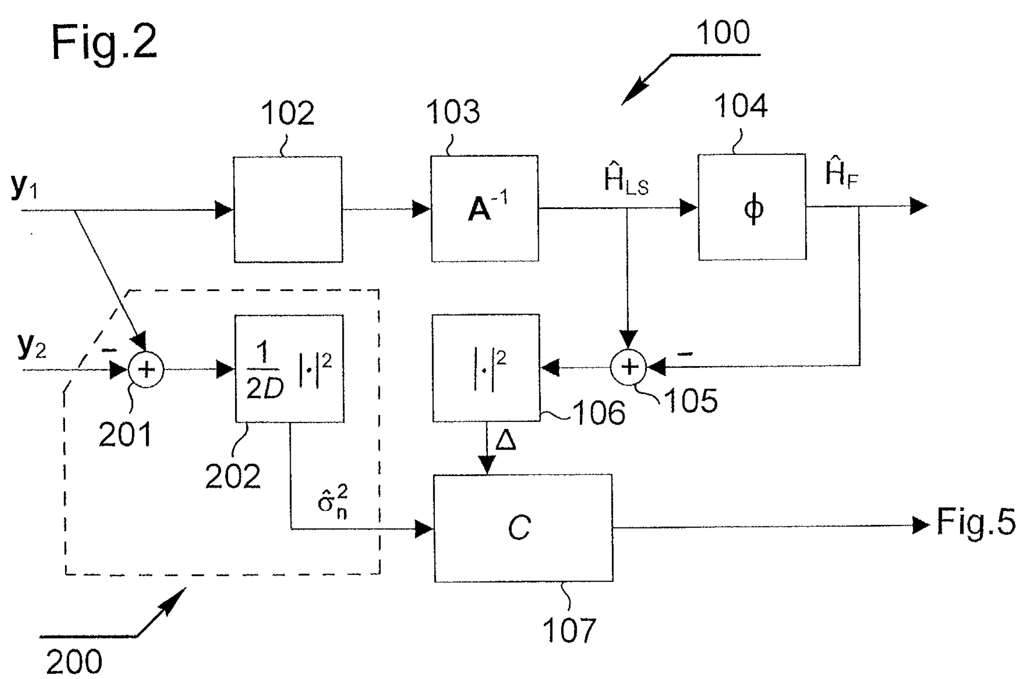
100
102
103
104
y_1
A^-1
Ĥ_LS
φ
Ĥ_F
y_2
−
+
1/2D |·|^2
|·|^2
+
−
201
202
106
105
Δ
σ̂_n^2
C
Fig.5
200
107

Fig.3

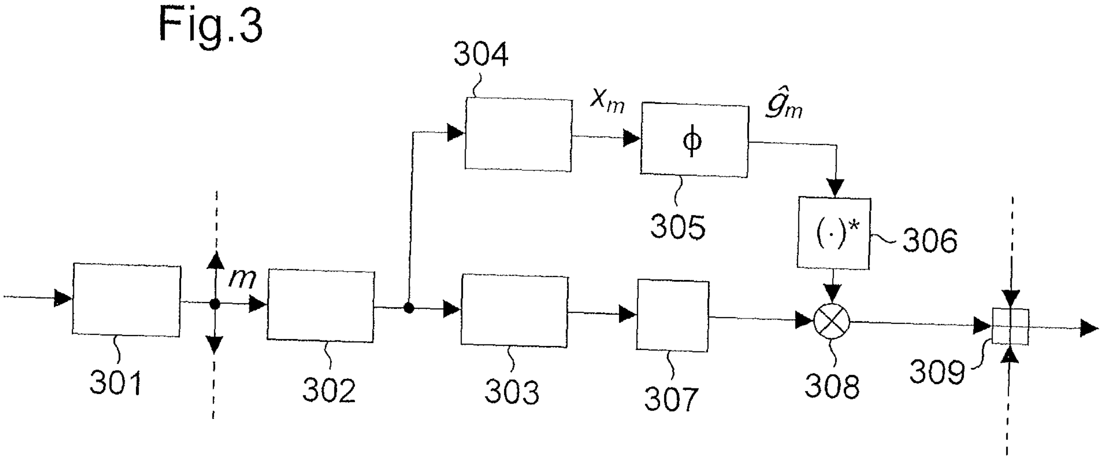
304
$x_m$
$\hat{g}_m$
ϕ
305
(·)*
306
m
301
302
303
307
308
309

Fig.4

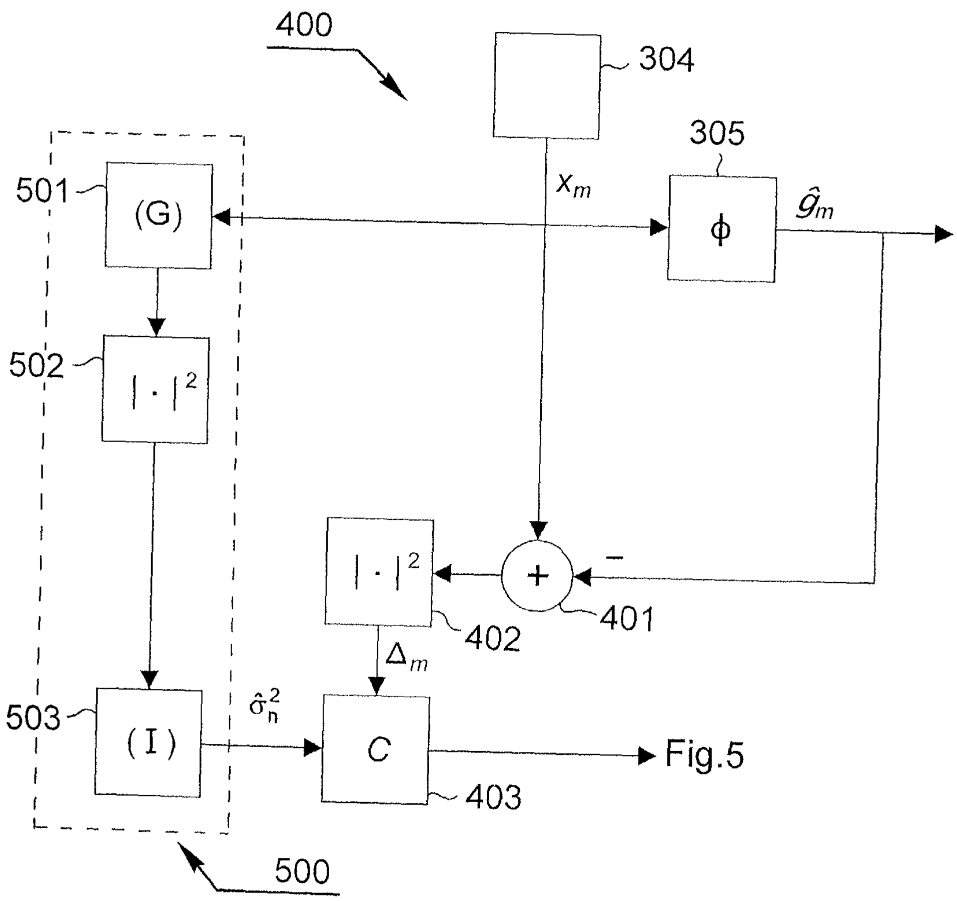
400
304
305
501
(G)
$x_m$
ϕ
$\hat{g}_m$
502
|·|²
|·|²
+
−
401
402
$\Delta_m$
503
(I)
$\hat{\sigma}_n^2$
C
Fig.5
403
500

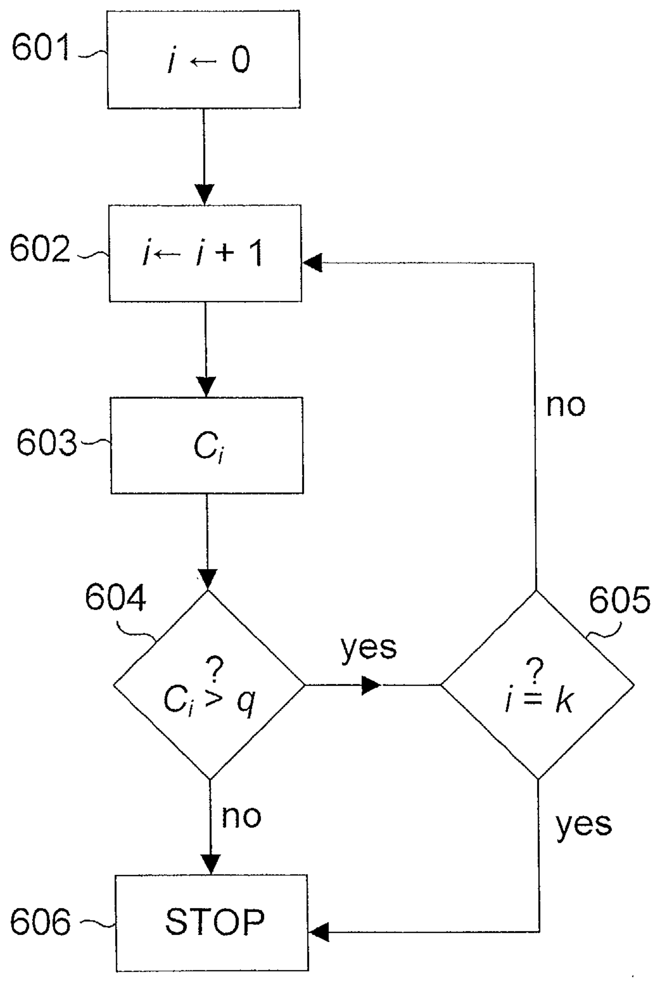
601
$i \leftarrow 0$
602
$i \leftarrow i + 1$
603
$C_i$
604
$C_i \overset{?}{>} q$
yes
605
$i \overset{?}{=} k$
no
no
yes
606
STOP

Fig.5

European Patent Office

# EUROPEAN SEARCH REPORT

Application Number
EP 02 29 2303

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 954 142 A (LUCENT TECHNOLOGIES INC) 3 November 1999 (1999-11-03) * abstract * * page 2, line 31 - line 35 * | 1-3,5, 8-10, 12-16 | H04L25/02 |
| A | * page 4, line 28 - page 5, line 36 * --- | 4 | |
| A | EP 0 496 152 A (ROKE MANOR RESEARCH) 29 July 1992 (1992-07-29) * column 3, line 7 - line 9 * * column 3, line 55 - line 57 * * column 5, line 29 - line 32 * * column 5, line 50 - line 54 * --- | 1,2, 8-10, 12-14,16 | |
| A | US 5 533 067 A (GUDMUNDSON BJOERN ET AL) 2 July 1996 (1996-07-02) * figures 4,10,11 * --- | 1,2, 8-10, 12-14,16 | |
| A | US 5 727 032 A (GUDMUNDSON BJOERN ET AL) 10 March 1998 (1998-03-10) * figures 4,11 * --- | 1,2, 8-10, 12-14,16 | TECHNICAL FIELDS SEARCHED (Int.Cl.7) H04L |
| A | SUN X Z ET AL: "Adaptive filters based on local estimates" PROCEEDINGS OF THE 1988 IEEE INTERNATIONAL SYMPOSIUM ON CIRCUITS AND SYSTEMS, 7 June 1988 (1988-06-07), pages 2549-2552, XP010069435 New York, NY, USA, USA * page 2549, left-hand column, last paragraph * * page 2549, right-hand column, paragraph 3 * * page 2550, left-hand column, last paragraph - paragraph 1 * ----- | 6,7,11 | |

The present search report has been drawn up for all claims

| Place of search | Date of completion of the search | Examiner |
|---|---|---|
| BERLIN | 23 May 2003 | Farese, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**Application Number**

EP 02 29 2303

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent Office

# LACK OF UNITY OF INVENTION SHEET B

Application Number

EP 02 29 2303

The Search Division considers that the present European patent application does not comply with the requirements of unity of invention and relates to several inventions or groups of inventions, namely:

1. Claims: 1-5, 8-10, 12-16

   bandwidth estimation criterion for OFDM signals

2. Claims: 6, 7, 11

   noise power estimation

## ANNEX TO THE EUROPEAN SEARCH REPORT ON EUROPEAN PATENT APPLICATION NO. EP 02 29 2303

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2003

| Patent document cited in search report | | Publication date | Patent family member(s) | | Publication date |
|---|---|---|---|---|---|
| EP 0954142 | A | 03-11-1999 | EP | 0954142 A1 | 03-11-1999 |
| | | | AU | 3719499 A | 16-11-1999 |
| | | | WO | 9956440 A1 | 04-11-1999 |
| EP 0496152 | A | 29-07-1992 | GB | 2252221 A | 29-07-1992 |
| | | | AT | 146922 T | 15-01-1997 |
| | | | DE | 69123830 D1 | 06-02-1997 |
| | | | DE | 69123830 T2 | 12-06-1997 |
| | | | DK | 496152 T3 | 09-06-1997 |
| | | | EP | 0496152 A2 | 29-07-1992 |
| | | | ES | 2095300 T3 | 16-02-1997 |
| US 5533067 | A | 02-07-1996 | SE | 513657 C2 | 16-10-2000 |
| | | | CA | 2126604 A1 | 25-12-1994 |
| | | | CN | 1110029 A ,B | 11-10-1995 |
| | | | CN | 1191353 A | 26-08-1998 |
| | | | CN | 1191351 A | 26-08-1998 |
| | | | MX | 9404754 A1 | 31-01-1995 |
| | | | SE | 9302204 A | 25-12-1994 |
| | | | US | 5727032 A | 10-03-1998 |
| US 5727032 | A | 10-03-1998 | SE | 513657 C2 | 16-10-2000 |
| | | | CA | 2126604 A1 | 25-12-1994 |
| | | | CN | 1110029 A ,B | 11-10-1995 |
| | | | CN | 1191353 A | 26-08-1998 |
| | | | CN | 1191351 A | 26-08-1998 |
| | | | MX | 9404754 A1 | 31-01-1995 |
| | | | SE | 9302204 A | 25-12-1994 |
| | | | US | 5533067 A | 02-07-1996 |

EPO FORM P0459

For more details about this annex : see Official Journal of the European Patent Office, No. 12/82